# EUROPÄISCHE PATENTSCHRIFT

(11) **EP 2 132 442 B1**
(45) Veröffentlichungstag und Bekanntmachung des Hinweises auf die Patenterteilung: **17.09.2014**
(21) Anmeldenummer: 08715664.2
(22) Anmeldetag: 29.01.2008
(51) Int. Cl.: F16H 1/46, F16H 37/08, F03D 11/02

(54) **GETRIEBE FÜR EINE WINDKRAFTANLAGE, DREHMOMENTSTÜTZE UND WINDKRAFTANLAGE**
TRANSMISSION FOR A WIND POWER INSTALLATION, TORQUE SUPPORTS, AND WIND POWER INSTALLATION
ENGRENAGE POUR UNE ÉOLIENNE, BRAS DE RÉACTION ET ÉOLIENNE

(30) Priorität: 27.02.2007 DE 102007009931; 02.04.2007 DE 102007016190
(43) Veröffentlichungstag der Anmeldung: 16.12.2009
(73) Patentinhaber: Giger, Urs, 5642 Mühlau (CH)
(72) Erfinder: Giger, Urs, 5642 Mühlau (CH)
(74) Vertreter: Farago, Peter Andreas
(86) Internationale Anmeldenummer: PCT/EP2008/000662
(87) Internationale Veröffentlichungsnummer: WO 2008/104258

(56) Entgegenhaltungen:
- EP-A2- 1 243 791
- WO-A-03/042576
- DE-A1- 19 963 597
- "Berechnung und Herstellung von Verzahnungen in Theorie und Praxis" MAAG-TASCHENBUCH, Oktober 1985 (1985-10), Seiten 234-236, XP007904949 Zürich

## Beschreibung

Die Erfindung betrifft ein Getriebe für eine Windkraftanlage, eine Drehmomentstütze und eine Windkraftanlage.

Eine Windkraftanlage wandelt die kinetische Energie des Windes in elektrische Energie um und speist sie in das Stromnetz ein. Dies geschieht, indem die Bewegungsenergie der Windströmung auf Rotorblätter wirkt. Diese sind in der Nabe gelagert, sodass sich der gesamte Rotor mit Nabe in eine Drehbewegung versetzt. Die Nabe ist über eine Welle an ein Getriebe angeschlossen. Dieses ist häufig ein Planetengetriebe. Die Rotation wird anschließend an einen Generator weitergegeben, welcher den elektrischen Strom hervorbringt.

In "Berechnung und Herstellung von Verzahnungen in Theorie und Praxis", MAAG-Taschenbuch, Oktober 1985 (1985-10), Seiten 234ff, XP007904949 Zürich, ist ein Prinzip eines Getriebes mit gekoppelter erster und zweiter Planetenstufe gezeigt, welches unter den Wortlaut des Oberbegriffs des Anspruchs 1 fällt.

Die US 2006/0104815 A1 zeigt den Kopf einer Windkraftanlage mit einer Nabe, die beim Übergang zur Welle so gelagert ist, dass die Querkräfte dort aufgenommen werden. Von der Nabe zum Generator kann daher eine relativ dünne Welle verwendet werden, die lediglich torsionsfest sein muss. Diese ist dementsprechend kostengünstig.

Die EP 1 788 281 A1 zeigt ein Getriebe für eine Windkraftanlage.

Die EP 0 792 415 B2 zeigt ein Planetengetriebe für eine Windkraftanlage mit einem in einem Getriebegehäuse gelagerten Planetenträger, der mit einer querkraftbelasteten Antriebswelle verbunden ist. Die Antriebswelle ist über den Planetenträger im Getriebe gelagert.

Die EP 1 482 210 B1 schlägt ein Getriebe mit einer leistungsaddierenden Stufe vor, welche zwei Planetengetriebe hat, jeweils mit einer Sonne, Planetenrädern, einem Hohlrad und einem gemeinsamen Planetenträger.

Der Inhaber jenes Patents hat ebenfalls vorgeschlagen, ein Koppelgetriebe in die Rotornabe zu integrieren. Mit dem in die Rotornabe integrierten Getriebe und der Lagerung in nur einem Rotorhauptlager lässt sich eine deutliche Erhöhung der Leistungsdichte erreichen.

Die EP 1 544 504 A2 beschreibt ein Kegelwälzlager für ein Windkraftgetriebe.

Die DE 100 63 597 A1, die EP 1 243 791 A2 und die WO 03/042576 A offenbaren weitere Getriebe, unter anderem für Windkraftanlagen.

Der Erfindung liegt die Aufgabe zu Grunde, eine verbesserte Windkraftanlage zur Verfügung zu stellen.

Nach der Erfindung löst diese Aufgabe ein Getriebe für eine Windkraftanlage mit den Merkmalen des Patentanspruchs 1.

Begrifflich sei hierzu erläutert, dass zwei Planetenstufen dann gekoppelt sind, wenn genau zwei der drei Zentralwellen gekoppelt sind.

Ein Koppelgetriebe bietet viele Vorteile für die Windindustrie. Trotz geringer Masse und geringem Bauvolumen wird eine große Übersetzung ermöglicht. Damit eignet sich diese Konstruktion besonders für leistungsstarke Anlagen, deren langsam laufende große Rotoren ein hohes Antriebsmoment aufbringen.

Sehr von Vorteil ist die Leistungsaufteilung auf zwei Stufen. Dadurch kann eine sehr kompakte Lösung konstruiert werden. Diese Technologie wurde in zwei Prototypen im Jahr 2003 eingebaut und erfolgreich in einer N60-Windturbine der Firma Nordex getestet.

Die Größe des übertragbaren Drehmoments erhöht sich mit der Anzahl der Planeten. So erhöht sich beispielsweise beim Einsatz von fünf Planeten statt drei Planeten die Drehmomentübertragung um 66 Prozent. Beim Einsatz von acht Planeten wird eine Steigerung von 166 Prozent ermöglicht.

In der Windkraftindustrie ist die Frage nach dem idealen Antriebskonzept bislang unbeantwortet. So werden Rotoreingangsmomente von 25 Mio. Nm bei 6 Umdrehungen pro Minute erwartet.

In jedem Falle spielen für die Anwendung in der Windindustrie Umlaufgetriebe die wichtigste Rolle. Dank der zahlreichen Möglichkeiten bereiten diese Getriebe jedoch Schwierigkeiten in Theorie, Berechnung und Konstruktion. Kennzeichnend sind drei Zentralwellen, welche miteinander diese kompakte Getriebebauweise auszeichnen. Im Planetenträger gehalten und gelagert befinden sich drei oder mehr Planetenräder, welche mit dem zentralen Sonnenritzel und dem Zahnkranz, nämlich dem Hohlrad, in Eingriff stehen. Damit wird die zu übertragende Leistung auf mehrere Zahneingriffe verteilt. Dieser Vorteil kommt dort stark zur Geltung, wo sehr hohe Drehmomente bei mittleren und niedrigen Drehzahlen übertragen werden müssen. Idealerweise setzt man die größtmögliche Anzahl von Planeten in einer Stufe ein. Dadurch wird die Kompaktheit voll ausgeschöpft.

Große Gesamtübersetzungen werden in hintereinander geschachtelten Koppelgetrieben verwirklicht.

Das optimale Verhältnis zwischen Planeten, Planetenstufen und der einzelnen Stufenübersetzung gilt es vorsichtig abzuwägen. Die ausgewogene Verzahnung in der einzelnen Stufe ist das Ergebnis eines langen zeichnerischen und rechnerischen Iterationsprozesses, so dass die gewünschten Sicherheiten gegen die verschiedenen Versagensarten der Bauteile eingehalten werden können und eine ökonomisch und konstruktiv richtige Basis für das Getriebe gelegt wird.

Planetengetriebe werden prinzipiell in zwei unterschiedliche Urtypen eingestuft: Einerseits in das einfache Einsteg-Planetengetriebe mit umlaufendem Planetenträger (planetary gear). Andererseits das mit feststehendem Planetenträger arbeitende Standgetriebe (star gear). Der erstgenannte Typ wird in der Praxis auch als Typ PU oder schlicht als Planetengetriebe bezeichnet. Der zweitgenannte Typ wird in der Praxis oft als PF oder schlicht als Zapfengetriebe bezeichnet.

Die beiden Typen unterscheiden sich in der Festhaltung, das heißt in der Abführung des Reaktionsmoments, und in der Drehrichtung des An- und Abtriebes. Einmal ist das Hohlrad als Reaktionselement gewählt, nämlich beim Planetengetriebe, beim Zapfengetriebe hingegen der Planetenträger. Im Vergleich bei baugleicher Ausführung mit sieben Planeten ist das Star-Getriebe mit der Stufenübersetzung im Nachteil. Beim Planetengetriebe des ersten Typs erhält man bei einem Rechenbeispiel ausgehend vom gleichen Eingangsmoment ein um 30 Prozent kleineres Reaktionsmoment, abgegeben über das Hohlrad, und kleinere Verzahnungskräfte bei einer um 43 Prozent höheren Ausgangsdrehzahl. Dies bewirkt kleinere Lagerkräfte in den Planeten, was größere Lagerlebensdauer für die Planeten beim einfachen Planetengetriebe (PU, planetary gear) ermöglicht.

Daraus könnte das Planetengetriebe des ersten Typs als vorteilhaft gegenüber dem Star-Getriebe angesehen werden. In vielen Konstruktionsfällen ist dies zwar richtig. Sehr oft wird das Star-Getriebe nur dort eingesetzt, wo der Planetenträger nicht umlaufen darf, weil er sonst zusätzlich große Fliehkräfte auf die Planetenlagerung auslösen würde.

Jedoch ist für die Versorgung von Frischöl in die Planetenträger der stehende Planetenträger der PF-Lösung ein großer konstruktiver Vorteil. Die Verwendung von vielen Planeten lässt aber die mögliche Stufenübersetzung recht klein aussehen.

Da der Planetenträger den Drehmomentensummierer der beiden anderen Zentralwellen spielt, ergeben sich aus den beiden Eingriffen Sonne-Planet und Planet-Hohlrad zwei Kräfte, welche aufsummiert in Gegenrichtung die Lagerkraft des Planeten definieren. Um diese Lagerkraft klein zu halten, stehen verschiedene Möglichkeiten zur Verfügung. Einerseits kann durch Vergrößerung der Achsabstände Sonne-Planet die Kraft verkleinert werden, oder andererseits mit der Erhöhung der Anzahl der Leistungswege, sprich Planeten, welche an der Leistungsaufteilung beteiligt sind.

Bei einem Rechenbeispiel bewirkt eine Erhöhung der Planetenanzahl von drei auf acht einige signifikante Veränderungen einer PU-Stufe. Zum einen wird das übertragbare Moment um 166 Prozent gesteigert, und zum zweiten wird der Achsabstand Sonne-Planet als Folge der größer werdenden Sonne länger. Dies bedeutet eine erste Reduktion der einzelnen Planetenachsreaktionskräfte. Als weiteres Merkmal ist die Verkleinerung der Verzahnungsbreite zu erwähnen. Oft können die Verzahnungsgrenzwerte nun nicht mehr ausgenutzt werden. Die Planetenlagerung stößt zuerst an die Belastungsgrenze, vor der Verzahnung. Aber auch dort ergibt bei der Erhöhung der Eingriffe eine kleiner werdende Reaktionskraft eine annähernde Versechsfachung der Lagerlebensdauer.

Erweitert man nun die Betrachtung auf Planetenkoppelgetriebe, um höhere Übersetzungsverhältnisse zu realisieren, kommen weitere Aspekte hinzu. Bei dieser Verschachtelung von Umlaufstufen werden bevorzugt einwandige Planetenträger verwendet. Mit dieser Anordnung wird der zur Verfügung stehende Raum für die Planeten nicht durch die Verbindungsstege eingeschränkt. Der Vorteil wird vollständig ausgeschöpft, wenn bis zu acht oder mehr Planeten in den Stufen mit hohen Eingangsmomenten eingesetzt werden. Die Kopfkreisel der Planeten können bis auf wenige Millimeter zusammengerückt werden. Grundsätzlich kann ein baugleicher Planet in allen gewählten Stufen verbaut werden. Diese Gleichsetzung vereinfacht das Fertigungslos, und die Bauteilvielfalt wird reduziert.

Aus der Überlegung heraus, dass die Windkraftgetriebe großen Anteil an den Schadensfällen bei Windkraftanlagen haben, wurden neue Konzepte entwickelt. Es wurden von unterschiedlichen Herstellern Lösungen gesucht, welche völlig unterschiedlich sind. Diese Konzepte arbeiten insoweit mit der gleichen Systematik, als dass die eingehende Leistung auf zwei oder drei Umlaufstufen aufgeteilt wird, um in einer letzten Stirnradstufe den Zugang zum Rotor für die Flügelverstellung zu ermöglichen. Die Zusammenführung der Leistung geschieht in allen Fällen mit einer Differenzialstufe, welche drei drehende Zentralwellen aufweist. Die Dimensionierung mit der Differenzleistung bewirkt eine Verkleinerung der Konstruktion, weil das Eingangsmoment auf zwei bzw. drei Stufen aufgeteilt wird. Das einzelne Bauteil kann daher bei richtiger Auslegung dieser Konstruktionsweise mit recht kleiner Belastung betrieben werden.

Durch die Koppelung immer zweier Zentralwellen muss durch die Verschachtelung von mehreren koaxialen Elementen mit einer großen Sonne gearbeitet werden.

So schlägt Bosch ein Getriebe mit herkömmlichen, doppelwandigen Planetenträgern und je drei Planeten in der Stufe vor. Die Eingangsleistung wird in einer ersten Stufe auf einen drehenden Planetenträger in einem feststehenden Hohlrad bei drehender Sonne eingebracht. Das Hohlrad der zweiten Stufe ist mit dem rotierenden Planetenträger der ersten Stufe gekoppelt. In der zweiten Stufe steht der Planetenträger fest. Die Sonne der ersten Stufe ist innerhalb der Sonne der zweiten Stufe koaxial durch die zweite Stufe hindurchgeführt. In der dritten Stufe ist das umlaufende Hohlrad mit der Sonne der zweiten Stufe gekoppelt. Der umlaufende Planetenträger der dritten Stufe ist an die Sonne der ersten Stufe gekoppelt. Die drehende Sonne der dritten Stufe beinhaltet den Abtrieb. Diese gewählte Konstruktion verlangt allerdings viele Lagerungen von schwimmenden Koppelwellen. Dies birgt die große Gefahr von unbestimmten Lagerkräften. Der Planetenträger der Stufe eins mit dem angeflanschten Hohlrad braucht zwei Lagerungen. Die zwei nachfolgenden koaxialen Sonnen müssen ebenfalls definiert über Lagerungen gehalten werden. Die Lösung ist daher recht aufwändig.

Während die Bosch-Konstruktion zwei gekoppelte Stufen mit einer anschließenden summierenden Stufe verwendet, schlägt das Koppelgetriebe des Unternehmens MAAG ein zweistufiges Getriebe vor: Das Eingangsmoment dreht in der ersten Stufe den Planetenträger. Die Sonne der ersten Stufe ist koaxial durch die Sonne der zweiten Stufe hindurchgeführt und bewirkt unmittelbar den Abtrieb. Das drehende Hohlrad der ersten Stufe ist durch eine Koppelung mit der hohlen Sonne der zweiten Sonne verbunden. In der zweiten Stufe ist der Planetenträger feststehend. Das drehende Hohlrad der zweiten Stufe ist mit dem drehenden Planetenträger der ersten Stufe gekoppelt und somit ebenfalls unmittelbar an das Eingangsmoment angeschlossen.

Demgegenüber wählt der hier vorgestellte Aspekt der Erfindung einen neuen Weg:

Das MAAG-Koppelgetriebe ist zweistufig aufgebaut. Das Bosch-Getriebe verwendet drei Stufen für die Momente.

Hier vorliegend wird jedoch vorgeschlagen, dass eingangsseitig zunächst zwei gekoppelte Planetenstufen zum Aufteilen der Eingangsleistung angeordnet sind, wobei anschließend eine rein drehzahlerhöhende Planetenstufe mit voller Leistungsübertragung angeordnet ist.

Die Summierung der Momente erfolgt somit nicht erst in der dritten Stufe, sondern die dritte Stufe erhält bereits die volle Leistungsübertragung. Das Drehmoment wird mit einer Star-/Diffenentialkombination gebrochen und mit der einfachen, folgenden Planetenstufe auf Drehzahl gebracht.

Bei Prototypenentwürfen des Erfinders hat sich gezeigt, dass diese Konstruktion leicht 25 Prozent kürzer als existierende Lösungen bauen kann, wenn eine geeignete Anzahl von Planeten eingesetzt wird.

Dieser Ansatz ist in der Windkraftindustrie völlig neu und ermöglicht die bislang beste und sicherste Bauform von Windkraftgetrieben.

Die Getriebelösung kann außerdem sehr gut über den feststehenden Reaktionsarm gehalten und alle Lager mit Frischöl versorgt werden.

Die überragenden Vorteile einer solchen Konstruktion sowohl hinsichtlich der Konstruktionskosten als auch hinsichtlich der Wartungskosten und der Lebensdauer wirken sich insbesondere bei leistungsstarken Windkraftanlagen von 2,5 MW, 3 MW, 5 MW oder mehr aus. Auch für deutlich größere Anlagen wird diese Art der Konstruktion für wegweisend gehalten. Im Stand der Technik ist lediglich bekannt, die einzelnen Planetenstufen seitlich an die Drehmomentstütze anzuschrauben. Der Erfinder hat herausgefunden, dass es von Vorteil ist, dass die dritte Planetenstufe direkt in die Reaktionsscheibe der Dreh-momentstütze integriert ist, also ohne dass ein seitliches Hervorstehen in axialer Erstreckung notwendig ist. Hierdurch kann das Getriebe beziehungsweise die gesamte Windkraftanlage kompakter, einfacher und kostengünstiger bauen.

Nach einer besonderen Ausführungsart der vorliegenden Erfindung kann die Dreh-momentstütze ein axial hervorstehendes Festlager für eine Planetenstufe aufweisen.

Es wird vorgeschlagen, dass die dritte Planetenstufe radial in die Drehmomentstütze integriert ist. Es wurde bereits erläutert, dass das Eingangsmoment in zwei Stufen aufgeteilt wird, wobei sich anschließend eine dritte Stufe anschliesst, die die vollständige Leistung trägt, wobei bevorzugt eine höhere Drehzahl, und somit ein niedrigeres Moment, dort anliegt. Durch die Integration einer dritten Planetenstufe radial in die Drehmomentstütze kann ein dreistufiges Getriebe mit der herkömmlich bekannten Baulänge eines zweitstufigen Getriebes hergestellt werden, weil die dritte Stufe axial keine Vergrößerung der bisherigen Bauweise erfordert.

Insbesondere kommt in Betracht, eine drehzahlerhöhende Planetenstufe mit voller Leistungsübertragung radial in die Drehmomentstütze zu integrieren. Dies gilt unabhängig davon, ob die drehzahlerhöhende Planetenstufe die dritte oder eine zahlenmäßig höhere Planetenstufe ist.

Eine drehzahlerhöhende Planetenstufe mit voller Leistungsübertragung ist bevorzugt mit den gekoppelten leistungsaufteilenden Planetenstufen über einen rotierenden Planetenträger angeschlossen. Bei einer solchen Konstruktion muss aus den leistungsaufteilenden Planetenstufen lediglich das Moment herausgeführt werden, beispielsweise über deren zentrale Sonne, und in den rotierenden Planetenträger der drehzahlerhöhenden Planetenstufe mit voller Leistungsübertragung eingespeist werden. Das Hohlrad dieser Stufe kann sehr leicht festgehalten werden, da es naturgemäß außen an der Planetenstufe liegt und auf diese Weise leicht gelagert werden kann.

Es wurde bereits erläutert, dass das Hohlrad beispielsweise in die Drehmomentstütze integriert sein kann. Bei einer solchen Konstruktion dreht in der drehzahlerhöhten Planetenstufe das zunächst leistungsaufgeteilte und sodann zusammengeführte Moment aus den vorhergehenden Stufen den Planetenträger, und die Sonne der drehzahlerhöhenden Stufe treibt mit erhöhter Drehzahl ab. Während die ersten beiden Stufen somit die Momentenaufteilung bewirken, bewirkt die ebenfalls gekoppelte dritte Stufe eine erhöhte Drehzahl. Als Reaktionsarm hierfür kann die Drehmomentstütze in Betracht kommen.

Bevorzugt ist an einer Drehmomentstütze hervorstehend in diese integriert ein Festlager für eine zweite Planetenstufe vorgesehen. Es wurde bereits darauf hingewiesen, dass die Drehmomentstütze ohnehin vonnöten ist, um die Eingangsmomente vom Rotor zu lagern. Der Erfinder hat erkannt, dass die Drehmomentstütze hervorragend als Planetenträger verwendet werden kann. So lassen sich mit radialem Abstand zum Zentrum der Drehmomentstütze mit wenig Aufwand Planetenträger axial hervorstehend an der Drehmomentstütze in diese integrieren.

Insbesondere sei also daran gedacht, dass die Drehmomentstütze auf diese Weise einen Planetenträger aufweist. In der Praxis ist es ideal, wenn die Drehmomentstütze Planetenträger für mindestens drei, besser mindestens fünf, bevorzugt für mindestens acht, Planeten Planetenträger aufweist.

Jeder Planetenträger ist bevorzugt in flex-pin-Technologie ausgeführt. In dieser Technologie werden die Planeten auf Hülsen gelagert, die nur an einem Ende mit dem Planetenbolzen verbunden sind. Dem Konstrukteur wird hierdurch ein geeigneter Lastausgleich in den Umlaufgetriebestufen zur Verfügung gestellt, welcher bei einer hohen Anzahl von Planeten den erforderlichen hohen Grad an Lastausgleichssicherheit aufweist. Insbesondere wird ein Ausgleich gefunden, welcher den Planeten eine parallele, geometrisch exakte Verbindung ermöglicht. Bei Verwendung von flex-pin-Lagerungen heben die Neigungen des Bolzens und der Hülse infolge der Verzahnungskräfte sich weitgehend auf, so dass die Planetenräder unter Beibehaltung ihrer parallelen Achslage radial nachgeben können.

Alternativ und kumulativ kann eine Drehmomentstütze ein Hohlrad aufweisen. Es wurde bereits erläutert, dass ein Hohlrad im Idealfall einfach radial in die Drehmomentstütze integriert werden kann.

Eine Drehmomentstütze ist bevorzugt über einen Umfang des Getriebes umlaufend gestaltet. Herkömmliche Drehmomentstützen sind einfache Arme, die von einer beliebigen Stelle des Getriebes zu einem Lagerpunkt am Turmkopf der Windkraftanlage hervorstehen. Wenn die Drehmomentstütze demgegenüber um einen Umfang umlaufend gestaltet ist, fällt es leichter, einzelne Komponenten von Planetengetrieben an der Drehmomentstütze anzuschließen oder in diese zu integrieren.

Bei Versuchen des Erfinders hat sich herausgestellt, dass eine erste und eine zweite Planetenstufe die Eingangsleistung bevorzugt in einem Verhältnis von etwa 60 : 40 aufteilen, bevorzugt mit einer Schwankung von jeweils +/- 10. Der Erfinder hat Berechnungen durchgeführt, bei denen mit einer Aufteilung 60 : 40 sehr gute Ergebnisse hinsichtlich der Leistungsaufteilung und der Langlebigkeit sowie auch hinsichtlich einer optimierten Blitztemperatur resultierten.

Bevorzugt ist eine Stirnradstufe vorgesehen, welche als Modul aufsteckbar gestaltet ist. Dies ist besonders dann eine geeignete Konstruktion, wenn sich die Stirnradstufe auf der anderen Seite der Drehmomentstütze befindet als die leistungsaufteilenden gekoppelten Stufen des Planetengetriebes. Bei einer solchen Anordnung lässt sich das gesamte Getriebe baukastenartig zusammenstecken und dementsprechend leicht warten. So hat der Erfinder einen Prototypen entwickelt, bei dem das gesamte Getriebe einschließlich Generator und Stator in weniger als zwei Stunden auseinander gebaut und gegebenenfalls vollständig oder zum Teil ausgetauscht werden kann.

Die Wartung der Komponenten wird erleichtert, wenn zumindest an den Hauptkomponenten der Windkraftanlage, zumindest aber des Getriebes, RFID-Tags angebracht sind, welche eine automatisierte Protokollierung und Überprüfung von Daten beispielsweise zur Lebensdauer der einzelnen Komponenten erleichtern.

Die Stirnradstufe selbst weist bevorzugt ein Offset auf. Ein Generator kann hierdurch exzentrisch bezüglich einer Längsachse der Nabe und des Getriebes angeflanscht werden.

Die Berechnungen und Versuche des Erfinders haben ergeben, dass mit einem dreistufigen oder einem vierstufigen Getriebe praktisch alle Eingangsmomente mit hohen Sicherheitsbeiwerten abgetragen werden können.

Dies ist sogar dann möglich, wenn sämtliche Verzahnungsbreiten höchstens 280 mm betragen. Hierdurch wird eine äußerst kompakte Bauweise der Windkraftanlage erreicht. Nach den Maßen eines Prototyps des Erfinders baut die Anordnung aus Rotor und Getriebe leicht 600 mm kürzer, unter Umständen sogar 1000 mm kürzer als bei bislang bekannten Windkraftanlagen. Berücksichtigt man, dass solche Getriebe oft Durchmesser von 2 m und mehr haben, insbesondere in der Leistungsklasse ab 5 MW, so baut die Anlage, insbesondere das Getriebe, schnell 10 t leichter als herkömmliche Anlagen. Gleichzeitig können bis zu 20 Prozent größere Sicherheitsbeiwerte oder besser erreicht werden.

Bei einer Berechnung der Blitztemperatur an einem Planetengetriebe mit acht Planeten haben sich Höchsttemperaturen zwischen 105 und 110 °C ergeben, jeweils knapp 0,2 mm vor und hinter einem Nullpunkt entlang einer Eingrifflinie. Die Blitztemperatur am Nullpunkt sowie etwa 0,3 mm vor und hinter dieser Stelle berechnete sich zu etwa 85 °C.

Es versteht sich, dass eine Drehmomentstütze für ein Getriebe der vorbeschriebenen Art selbständig vorteilhaft ist. Eine solche Drehmomentstütze kann insbesondere ein radial integriertes Hohlrad und/oder ein Festlager für eine Planetenstufe axial hervorstehend integriert aufweisen.

In analoger Weise profitiert eine Windkraftanlage davon, wenn ein Getriebe der vorstehend betrieben Art verbaut ist.

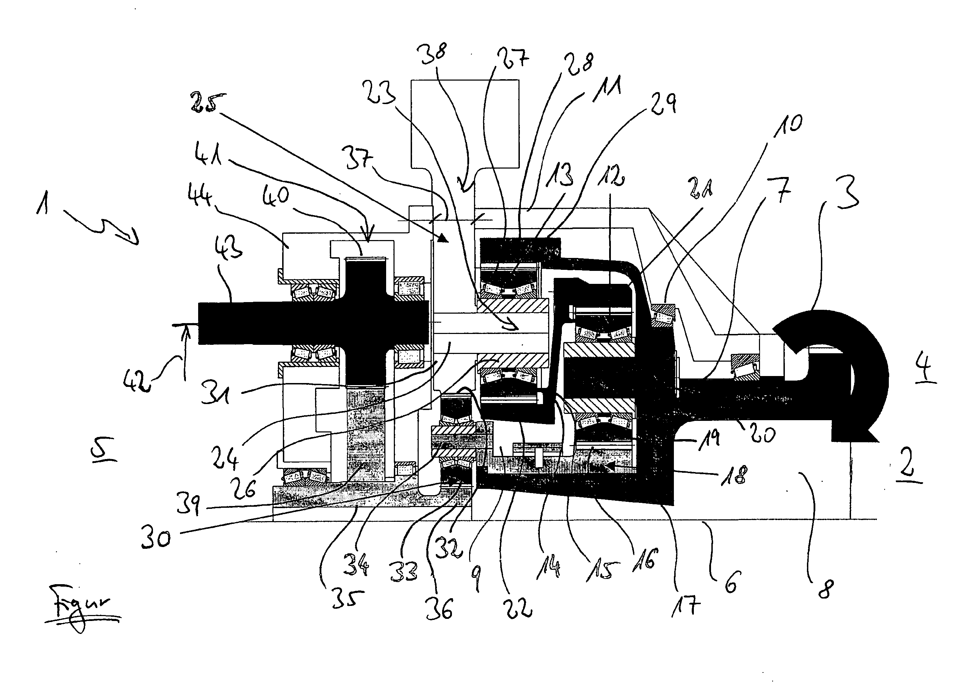

Die Erfindung wird nachstehend anhand eines Ausführungsbeispiels unter Bezugnahme auf die Zeichnung näher erläutert. Es zeigt
- die einzige Figur: schematisch einen Längsschnitt durch ein Getriebe einer Windkraftanlage mit einer Nabe, einem Getriebegehäuse, einer Drehmomentstütze, drei Getriebestufen mit integrierter dritter Stufe in die Drehmomentstütze sowie mit einer abschließenden Stirnradstufe mit Offset.

Die Windkraftanlage 1 in der Figur besteht (im dargestellten Bereich) zunächst aus der Nabe 2. An der Nabe 2 sind Rotorblätter (nicht dargestellt) der Windkraftanlage 1 angeschlossen, so dass ein eingehendes Moment 3 an einer Eingangsseite 4 eingeleitet wird.

An die Nabe 2 schließt sich in Richtung zu einer Ausgangsseite 5 symmetrisch um eine Längsachse 6 eine Rotorwelle 7 an. Diese weist einen ersten inneren Hohlraum 8 und einen zweiten Hohlraum 9 auf. Hierzu erweitert sich die Rotorwelle 7 in Höhe eines zweiten Kegelwälzlagers 10 gemeinsam mit dem Getriebegehäuse 11.

Die Rotorwelle 7 beinhaltet in ihrem zweiten inneren Hohlraum 9 eine erste Planetenstufe 12 und eine zweite Planetenstufe 13 eines Planetengetriebes. Die erste Planetenstufe 12 und die zweite Planetenstufe 13 des Planetengetriebes liegen hinsichtlich der Längsachse 6 seriell angeordnet. Sie sind nur um einen Verbindungssteg 14 eines Kopplungsgliedes 15 hinsichtlich der axialen Erstreckung beabstandet.

In der ersten Planetenstufe 12 des Planetengetriebes ist eine erste Sonne 16 unmittelbar an einen inneren Hohlarm 17 der Rotorwelle 7 angeschlossen auf einer inneren Koppelwelle 18 angeordnet. Erste Planetenräder 19 (exemplarisch gekennzeichnet) sind auf ersten Lagerzapfen 20 (exemplarisch gekennzeichnet) gelagert, welche unmittelbar drehfest mit der aufweitenden Scheibe an der Rotorwelle 7 befestigt sind. Ein erstes Hohlrad 21 ist als eingangsseitiges Modul der äußeren Kopplungswelle 15 am Steg 14 angeordnet.

In der zweiten Planetenstufe 13 ist eine zweite Sonne 22 als radial innere und axial ausgangsseitige Konstruktion am Steg 14 der äußeren Koppelwelle 15 angeordnet. Zweite Planetenträger 23 (exemplarisch gekennzeichnet) sind mit Hilfe von statischen Lagerzapfen 24 (exemplarisch gekennzeichnet) unmittelbar in die Drehmomentstütze 25 integriert, stehen aber axial zur Eingangsseite und somit zu den beiden Planetenstufen 12, 13 hin aus der Drehmomentstütze 25 hervor, während die Lagerzapfen 24 zur Ausgangsseite 5 hin bündig mit der Drehmomentstütze 25 abschließen.

Auf einer flex-pin-Lagerung 26, welche sowohl in der ersten Planetenstufe 12 als auch in der zweiten Planetenstufe 13 an den Lagerbolzen 20, 24 zum Einsatz kommt, sind zweite Planetenräder 27 (exemplarisch gekennzeichnet) gelagert, welche im Eingriff mit einem zweiten Hohlrad 28 stehen, welches drehfest mit der Rotorwelle 7 verbunden ist und welches als Teil dessen ausgestaltet ist. An einem Ringflansch 29 ist die eigentliche Rotorwelle 7 mit dem zweiten Hohlrad 28 verbunden, so dass in axialer Hinsicht das zweite Hohlrad 28 gewissermaßen eine Fortsetzung der Rotorwelle 7 bildet.

Radial innerhalb der Drehmomentstütze 25 ist eine dritte Planetenstufe 30 in eine radial um die Längsachse 6 herumliegende Aussparung integriert. Ein radial von den Lagerzapfen 24 der zweiten Planetenstufe 13 nach innen weisender Ringfortsatz 31 weist hierzu ein drittes Hohlrad 32 auf.

Dritte Planetenräder 33 (exemplarisch gekennzeichnet) sind an einem radial nach außen weisenden Anschlussring der inneren Koppelwelle 18 an dortigen dritten Planetenträgerbolzen 34 gelagert. Eine Zentralwelle 35 dient als dritte Sonne 36.

In axialer hinsichtlich bezüglich der Längsachse 6 befinden sich das dritte Hohlrad 32, die dritten Planetenräder 33 und die dritte Sonne 36 vollständig innerhalb einer Baulänge 37 einer Reaktionsscheibe 38 der Drehmomentstütze 25.

Ausgangsseitig der Drehmomentstütze 25 ragt die zentrale Welle 35 aus der Drehmomentstütze 25 hervor. An diese schließt sich ein großes Zahnrad 39 drehfest verbunden an, welches in Eingriff mit einem kleinen Zahnrad 40 einer Stirnradstufe 41 steht. Diese führt mit einem Offset 42 zu einer Abtriebswelle 43, welche direkt zu einem Generator (nicht dargestellt) führen kann. Erst die Abtriebswelle 43 führt aus dem zweiteiligen Getriebegehäuse 11, 44 heraus.

Die Windkraftanlage 1 in der Figur ist beispielsweise eine 5 MW Fix Ratio Anlage mit vier Stufen mit 19 Planeten.

Im Betrieb der Windkraftanlage 1 wird das Eingangsmoment 3, welches an der Nabe 2 an der Eingangsseite 4 anliegt, über die Rotorwelle 7 in das Innere des Getriebegehäuses 11 eingeleitet. In den ersten beiden Planetenstufen 12, 13 erfolgt eine Leistungsaufteilung im Verhältnis 60 : 40. Die beiden ersten Planetenstufen 12, 13 sind hierzu gekoppelt.

Die nachfolgende dritte Planetenstufe 30 ist in die Drehmomentstütze 25 integriert. Die dritte Planetenstufe 30 überträgt zwar die gesamte Leistung, allerdings mit einer sehr hohen Drehzahl. Das von der dritten Getriebestufe resultierende Moment, welches von der Drehmomentstütze 25 abgefangen werden muss, ist daher sehr klein.

Das gesamte Getriebe baut äußerst kurz.

Die Drehmomentstütze 25 dient gleichzeitig als Planetenträger für die zweite Planetenstufe 13, als Aufnahme der entstehenden Drehmomente über die Scheibe 38 und als Hohlrad für die dritte Planetenstufe 30.

Sowohl die innere Koppelwelle 18 als auch die äußere Koppelwelle 15 brauchen keine separaten Lagerungen.

Obwohl die Drehmomentstütze 25 herkömmlich lediglich als Aufnahme des Drehmoments über den Reaktionsarm benutzt wurde, wird diese bei der hier vorliegenden Ausgestaltung gleich für zwei Stufen als Planetenträger und zusätzlich für die dritte Stufe als Hohlrad eingesetzt.

Die Stirnradstufe 41 ist als Modul mit der zweiten Hälfte 44 des Getriebegehäuses an die Drehmomentstütze 25 anschließbar. Dies erlaubt eine axiale Demontage der Stirnradstufe 41 gemeinsam mit der als dritte Sonne 36 in die Drehmomentstütze 25 hineinragenden zentralen Welle 35.

In modularer Bauweise lässt sich als nächstes die Drehmomentstütze 25 zur Ausgangsseite 5 hin entlang der Längsachse 6 von der ersten Hälfte des Getriebegehäuses 11 abziehen. An diesem Modul sind das dritte Hohlrad 32 sowie die zweiten Planetenträger 23 angeordnet.

Im nächsten Schritt kann zum Demontieren die äußere Koppelwelle 15 axial von den ersten Planetenrädern 19 abgezogen werden. Sodann sind sämtliche Bauteile einzeln erreichbar.

Die vier Getriebestufen der Windkraftanlage 1 gruppieren sich um die Drehmomentstütze 25 herum dergestalt, dass nur die erste Planetenstufe 12 und die vierte Planetenstufe, nämlich die Stirnradstufe 41, seitlich an der Baueinheit der Drehmomentstütze 25 angeordnet sind, und zwar jeweils eine Stufe auf einer Seite. An der Drehmomentstütze 25 selbst sind zwei Planetenstufen angeordnet, nämlich die zweite Planetenstufe 13 und die dritte Planetenstufe 30. Diese beiden Stufen liegen axial innerhalb der Erstreckung der Baugruppe der Drehmomentstütze 25, wenn die zweiten Lagerbolzen 23, welche zwar radial in die Drehmomentstützenscheibe 38 integriert sind, aber axial aus dieser hervorstehen, mitgerechnet werden.

Es sei ausdrücklich darauf hingewiesen, dass eine Windkraftanlage mit einem Getriebe, bei welchem an einer Drehmomentstütze eine oder zwei Planetenstufen angeordnet sind, während axial eingangsseitig eine einzige Planetenstufe angeordnet ist und ausgangsseitig eine Stirnradstufe angeordnet ist, auch für sich genommen und unabhängig von sämtlichen übrigen Merkmalen der vorliegenden Patentanmeldung vorteilhaft ist.

Dies gilt insbesondere dann, wenn an der Drehmomentstütze genau zwei Planetenstufen angeordnet sind, wovon eine radial innerhalb eines an der Drehmomentstütze ausgebildeten Hohlrads angeordnet ist und wobei eine zweite mit einem axialen Versatz hierzu an axial aus der Drehmomentstütze hervorstehenden Planetenlagerbolzen angeordnet ist.

## Patentansprüche

1. Getriebe für eine Windkraftanlage mit einer Aufteilung einer Eingangsleistung einer Rotorwelle (7) auf zwei gekoppelte Planetenstufen (12, 13), die eingangsseitig angeordnet sind, wobei die zwei gekoppelten Planetenstufen (12, 13) die aufgeteilte Eingangsleistung summieren,
***dadurch gekennzeichnet, dass***
anschließend an die zwei gekoppelten Planetenstufen (12, 13) eine drehzahlerhöhende dritte Planetenstufe (30) mit voller Leistungsübertragung angeordnet ist,
wobei die dritte Planetenstufe (30) ein Hohlrad (32), Planetenräder (33) und eine Sonne (36) aufweist,
und wobei sich das Hohlrad (32), die Planetenräder (33) und die Sonne (36) in axialer Hinsicht bezüglich einer Längsachse (6) der Rotorwelle (7) vollständig innerhalb einer Baulänge (37) einer Reaktionsscheibe (38) einer Drehmomentstütze (25) befinden.

2. Getriebe nach Anspruch 1, ***dadurch gekennzeichnet, dass*** die dritte Planetenstufe (30) radial in die Reaktionsscheibe (38) der Drehmomentstütze (25) integriert ist.

3. Getriebe nach Anspruch 1 oder 2, ***dadurch gekennzeichnet, dass*** die Drehmomentstütze (25) ein axial hervorstehendes Festlager (26) für die eine Planetenstufe (13) der zwei gekoppelten Planetenstufen (12, 13) aufweist.

4. Getriebe nach einem der vorausgehenden Ansprüche, ***dadurch gekennzeichnet, dass*** die dritte Planetenstufe (30) mit den zwei gekoppelten Planetenstufen (12, 13) über einen rotierenden Planetenträger (34) angeschlossen ist.

5. Getriebe nach einem der vorausgehenden Ansprüche, ***dadurch gekennzeichnet, dass*** die Drehmomentstütze (25) einen Planetenträger (23) für die eine Planetenstufe (13) der zwei gekoppelten Planetenstufen (12, 13) aufweist.

6. Getriebe nach einem der vorausgehenden Ansprüche, ***dadurch gekennzeichnet, dass*** die Drehmomentstütze (25) ein Hohlrad (32) für die dritte Planetenstufe (30) aufweist.

7. Getriebe nach einem der vorausgehenden Ansprüche, ***dadurch gekennzeichnet, dass*** die Drehmomentstütze über einen Umfang umlaufend gestaltet ist.

8. Getriebe nach einem der vorausgehenden Ansprüche, ***dadurch gekennzeichnet, dass*** die zwei gekoppelten Planetenstufen (12, 13) die Eingangsleistung in einem Verhältnis von etwa 60:40 aufteilen.

9. Getriebe nach einem der vorausgehenden Ansprüche, ***dadurch gekennzeichnet, dass*** eine Stirnradstufe (41) vorgesehen ist, welche als Modul aufsteckbar gestaltet ist.

10. Getriebe nach einem der vorausgehenden Ansprüche, ***dadurch gekennzeichnet, dass*** eine Stirnradstufe (41) vorgesehen ist, welche sich als einzige Stufe ausgangsseitig der Drehmomentstütze (25) befindet.

11. Getriebe nach einem der vorausgehenden Ansprüche, ***dadurch gekennzeichnet, dass*** eine Stirnradstufe (41) mit einem Offset (42) vorgesehen ist.

12. Getriebe nach einem der vorausgehenden Ansprüche, ***dadurch gekennzeichnet, dass*** es drei- oder vierstufig ist.

13. Getriebe nach einem der vorausgehenden Ansprüche, ***dadurch gekennzeichnet, dass*** sämtliche Verzahnungsbreiten höchstens 280 mm betragen.

14. Windkraftanlage mit einem Getriebe nach einem der vorstehenden Ansprüche.

## Claims

1. Gear for a wind power plant with a distribution of an input power of a rotor shaft (7) on two coupled planetary stages (12, 13) which are arranged on the input side, wherein the two coupled planetary stages (12, 13) combine the distributed input power,
***characterised in that***
thereafter at the two coupled planetary stages (12, 13) there is a speed-third planetary stage (30) with full power transmission,
wherein the third planetary stage (30) comprises a ring wheel (32), planet wheels (33) and a sun (36)
and wherein the ring wheel (32), the planet wheels (33) and the sun (36) in the axial orientation with respect to a longitudinal axis (6) of the rotor shaft (7) are located completely within the overall length (37) of a reaction disc (38) of a torque arm (25).

2. Gear according to claim 1, ***characterised in* that** the third planetary stage (30) is integrated radially to the reaction disc (38) of the torque arm (25).

3. Gear according to claim 1 or 2, ***characterised in that*** the torque arm (25) has an axially projecting bearing (26) for a planetary gear stage (13) of the two coupled planetary stages (12,13).

4. Gear according to one of the preceding claims, ***characterised in that*** the third planetary stage (30) is connected via a rotating planetary carrier (34) with the two planetary gear stages (12, 13).

5. Gear according to one of the preceding claims, ***characterised in that*** the torque arm (25) comprises a planetary carrier (23) for a planetary gear stage (13) of the two coupled planetary stages (12, 13).

6. Gear according to one of the preceding claims, ***characterised in that*** the torque arm (25) comprises a ring wheel (32) of the third planetary stage (30).

7. Gear according to one of the preceding claims, ***characterised in that*** the torque arm is arranged around a circumference.

8. Gear according to one of the preceding claims, ***characterised in that*** the two coupled planetary stages (12, 13) distribute the input power in a ratio of about 60:40.

9. Gear according to one of the preceding claims, ***characterised in that*** a spur gear stage (41) is provided, which is configured as an attachable module.

10. Gear according to one of the preceding claims, ***characterised in that*** a spur gear stage (41) is provided, which on the output side is the only stage of the torque arm (25).

11. Gear according to one of the preceding claims, ***characterised in that*** a spur gear stage (41) is provided with an offset (42).

12. Gear according to one of the preceding claims, ***characterised in that*** it is three or four-stage.

13. Gear according to one of the preceding claims, ***characterised in that*** all the teeth widths are at most 280 mm.

14. Wind power plant with a gear according to one of the preceding claims.

## Revendications

1. Boîte de vitesses pour éolienne, comprenant une répartition d'une puissance d'entrée d'un arbre de rotor (7) sur deux niveaux planétaires accouplés (12, 13) qui sont disposés du côté entrée, les deux niveaux planétaires accouplés (12, 13) additionnant la puissance d'entrée répartie,
**caractérisée en ce que**,
en aval des deux niveaux planétaires accouplés (12, 13), est disposé un troisième niveau planétaire (30) augmentant la vitesse de rotation et à pleine transmission de puissance,
le troisième niveau planétaire (30) présentant une roue creuse (32), des roues planétaires (33) et une roue soleil (36),
et la roue creuse (32), les roues planétaire (33) et la roue soleil (36) se trouvant, vues axialement par rapport à un axe longitudinal (6) de l'arbre de rotor (7), intégralement sur une longueur structurelle (37) d'un disque réactionnel (38) d'une cale anticouple (25).

2. Boîte de vitesses selon la revendication 1, **caractérisée en ce que** le troisième niveau planétaire (30) est intégré radialement dans le disque réactionnel (38) de la cale anticouple (25).

3. Boîte de vitesses selon la revendication 1 ou 2, **caractérisée en ce que** la cale anticouple (25) présente un palier fixe proéminent axialement (26) pour un niveau planétaire (13) parmi les deux niveaux planétaires accouplés (12, 13).

4. Boîte de vitesses selon une des revendications précédentes, **caractérisée en ce que** le troisième niveau planétaire (30) est raccordé aux deux niveaux planétaires accouplés (12, 13) par un support planétaire rotatif (34).

5. Boîte de vitesses selon une des revendications précédentes, **caractérisée en ce que** la cale anticouple (25) présente un support planétaire (23) pour un niveau planétaire (13) parmi les deux niveaux planétaires accouplés (12, 13).

6. Boîte de vitesses selon une des revendications précédentes, **caractérisée en ce que** la cale anticouple (25) présente une roue creuse (32) pour le troisième niveau planétaire (30).

7. Boîte de vitesses selon une des revendications précédentes, **caractérisée en ce que** la cale anticouple a une conformation continue en circonférence.

8. Boîte de vitesses selon une des revendications précédentes, **caractérisée en ce que** les deux niveaux planétaires accouplés (12, 13) répartissent la puissance d'entrée dans une proportion d'environ 60 à 40.

9. Boîte de vitesses selon une des revendications précédentes, **caractérisée en ce qu'**il est prévu un niveau à roue droite cylindrique (41) qui est réalisé sous forme d'un module enfichable.

10. Boîte de vitesses selon une des revendications précédentes, **caractérisée en ce qu'**il est prévu un niveau à roue droite cylindrique (41) qui est le seul niveau à se trouver du côté sortie de la cale anticouple (25).

11. Boîte de vitesses selon une des revendications précédentes, **caractérisée en ce qu'**il est prévu un niveau à roue droite cylindrique (41) avec un décalage (42).

12. Boîte de vitesses selon une des revendications précédentes, **caractérisée en ce qu'**il y a trois ou quatre niveaux.

13. Boîte de vitesses selon une des revendications précédentes, **caractérisée en ce que** les largeurs des dents sont de 280 mm au maximum.

14. Eolienne avec une boîte de vitesse selon une des revendications précédentes.
